# EUROPEAN PATENT APPLICATION

(11) **EP 4 272 919 A1**
(43) Date of publication of application: **08.11.2023**
(21) Application number: 23170138.4
(22) Date of filing: 26.04.2023
(51) Int. Cl.: B27C 5/06, B23Q 1/44, B23Q 1/48, B23Q 1/50, B27M 1/08

(54) **METHOD FOR THE ASSOCIATION BETWEEN COMPONENTS OF A MACHINE, AND THE MACHINE THAT CARRIES OUT THE METHOD**

(30) Priority: 03.05.2022 IT 202200008876
(71) Applicant: SCM Group S.p.A., 47921 Rimini (RN) (IT)
(72) Inventor: CIOLLI, Mattia, 47921 Rimini(RN) (IT); GESSI, Luca, 47921 Rimini(RN) (IT)
(74) Representative: Tiburzi, Andrea

(57) **Abstract**

The present invention relates to a method for the association of one or more blocking devices (24_{a, b, ..., i,} .., ₘ), to a machine for working (M) pieces (P) made of wood, glass, marble, plastic, metal, composite materials, wherein said working machine (M) comprises: a work table (2) having a plurality of fastening areas (20_{a, b, ..., k, ..., n}) for the support of a piece (P) to be machined, on which one or more blocking devices (24_{a, b, ..., i, ..., m}) can be mounted in an interchangeable way, main transceiver means (44), and a processing unit (45), connected to said main transceiving means (44), wherein each of said blocking devices (24ᵢ) comprises further transceiving means (43i). Said method comprising the step of: A. functionally associating by means of said processing unit (45) one of said blocking devices (24ᵢ) to said working machine (M), as a function of the comparison between the power of an association signal exchanged between said blocking means (24ᵢ) and said machine (M), and a signal power threshold, of predeterminable value.

The present invention also relates to a working machine (M).

## Description

The present invention relates to a method for the association between components of a machine, and the machine that carries out the method.

### Field of invention

More in detail, the invention concern a method of the type described above, studied and realized in particular for functionally associating operating components to a machine for working pieces made of wood, or glass, marble, plastic, metal, and composite materials, in which said components can optionally be removably constrained to the machine, in order to operate on it.

Likewise, said method can be applied to any other type of machine for working pieces, in which it is necessary to establish a dedicated and unambiguous communication of the signal, preferably in wireless mode, between a machine and a set of operating components intended to operate in the machine itself that controls them, so as to ensure the correct pointing of the commands given by the machine towards the specific operating component.

In the following, the description will be directed to the working of plate-like pieces, such as panels made of wood or composite materials, such us flat plates made of marble or glass, but it is clear that the same should not be considered limited to this specific use.

### Prior art

As is well known, currently in the field of working flat and plate-shaped pieces - in particular pieces made of stone materials such as marble, or plate-like pieces made of glass, or wood - machines of the type comprising a frame or base, a flat and generally horizontal work table suitable for blocking the pieces are known. In general, the work table in the woodworking machine sector is distinguished between a multifunctional table and a bar table.

Said machines also have an operating group, relatively mobile with respect to the work table, which is suitably equipped with the tools for working the piece itself.

The multifunctional table is a flat and horizontal table, in which a plurality of flat areas are normally distinguished for the fastening of components, which in this case are blocking devices for the pieces to be worked. On these areas one or more blocking devices for the pieces to be worked are arranged.

The bar table is a flat and horizontal table, and also in it - as in the multifunctional table - a plurality of areas intended for fastening components, in this case the blocking devices, are distinguished.

On each bar of said table, a plurality of blocking devices for the pieces to be worked have to be assembled in a removable manner - in this case also in a sliding manner.

The aforesaid blocking devices can also be different from each other in terms of function and/or structure. For example, some of them block the piece through the abduction of the vacuum brought up to the piece itself, and are called suction cups. Others instead block the piece mechanically, by means of two jaws having a reciprocal opening/closing motion, and are called clamps.

In the multifunctional table, said blocking devices are normally interposed between the multifunctional table and the piece itself, in the aforementioned flat fastening areas of the table, in pre-established positions thereon, identified from time to time according to the working program.

In the bar table, said blocking devices are instead interposed between each bar and the piece itself, being first slidingly inserted on each bar, then correctly positioned, and finally fixed in pre-established positions of the bar, identified from time to time according to the working program.

In the work tables of machines according to the prior art, the blocking devices of the piece to be worked receive from them the operating commands that they have to execute, for example, the piece clamping or release commands, and these commands are often sent in wireless mode, in order to avoid excessively wiring the machine.

These blocking devices, before the working, are often found dissociated from the machine itself, and, therefore, they have to be assembled on it, in the machine tooling operation, which usually takes place manually, by an assigned operator.

In the case of the multifunctional table, the blocking devices have to be assembled in one or more of the flat fastening areas of the table itself, whereas in the case of the bar table, the blocking devices have to be physically slidingly inserted on the bars themselves, by the assigned operator.

Furthermore, in the case of the bar table, the precise positioning of each blocking device along the length of the respective bar can take place with great precision thanks to various and known procedures, in particular by means of optical and/or luminous aids emitted by the machine, and intended for the operator, that signals a greater or less proximity of the current position with respect to the final fastening position, searched on the bar by the operator.

For the wireless type communication of the operating commands, from the machine to the blocking devices, an open-type system is also currently used. Based on this system, each blocking device is already arranged at the origin to receive and execute the commands that are transmitted by an external transmitter, such as the machine, and which simply have to comply with a standard transceiver protocol.

A drawback of said first type of communication system occurs in case in the workplace are present several machines operating according to the same transmission protocol. In fact, it can occur the case, in which for two nearby machines, the conditions for anomalous reflection of wireless signal could be created, so the commands of one machine could be received by the blocking devices on the other, this evidently with prejudice to the workings and to the safety of people.

In a second type of communication system between the machine and the blocking devices, in addition to a standard transceiver protocol, it is also provided to use an identification code that is unique for each blocking device, which is generally memorized on it at the time of its production. In this case, however, it is needed a manual data entry to introduce into the program of the machine the identification codes only of the blocking devices that the machine has to control.

This form of association, which is established between the machine and the blocking device in said second type of system, configures the drawback due precisely to the aforementioned necessity to manually enter the identification codes of the blocking devices, an operation which requires time, and especially introduces high probability of errors.

A third type of communication system is of the semi-automatic type, similar to the one used to associate a peripheral to a router, in a wireless network. However, undesired associations can occur in this case.

A situation of this type could arise, for example, in the case of neighboring machines, where the operator initializes a blocking device by association, while said blocking device is still in the transceiver range of a machine other than the desired one.

Therefore, it appears evident that all known procedures for transmitting commands between the machine and the blocking devices are onerous, especially in terms of the probability of errors, involving both working waste, therefore economic losses, and dangers for the operators themselves.

### Scope of the invention

In the light of the above, it is, therefore, an object of the present invention to provide a method for associating blocking devices to a machine for working pieces, which is free from the drawbacks described above, and which is of simple and economic implementation.

Another object of the invention is to provide a method that allows an easy transposition of it, to be performed on the usual processing units present on machines of the prior art.

Another further object is that of providing a method for machines which, in order to be made suitable for carrying out this method, require modifications which are of economic implementation, and which keep them substantially referable to the described prior art architectures.

### Object of the invention

It is, therefore, specific object of the present invention a method for the association of one or more blocking devices, to a machine for working pieces made of wood, glass, marble, plastic, metal, composite materials, wherein said working machine comprises: a work table having a plurality of fastening areas for the support of a piece to be machined, on which one or more blocking devices can be mounted in an interchangeable way, main transceiver means, and a processing unit, connected to said main transceiving means, wherein each of said blocking devices comprises further transceiving means, said method comprising the step of: A. functionally associating by means of said processing unit one of said blocking devices to said working machine, as a function of the comparison between the power of an association signal exchanged between said blocking means and said machine, and a signal power threshold, of predeterminable value.

Always according to the invention, said method may also comprise the following steps: B. transmitting an association signal by means of said further transceiving means of a blocking device; C. receiving said association signal by means of said main transceiver means of said machine; D. comparing, by means of said processing unit, the power of said association signal received in said step C, with a predeterminable power threshold; and E. associating said blocking device to said machine, if the power of said received association signal is greater than said predeterminable power threshold.

Still according to the invention, said processing unit may comprise at least one processing sub-unit, located in one of said fastening areas.

Advantageously according to the invention, said main transceiver means may comprise at least one transceiver module, located in one of said fastening areas.

Further according to the invention, said method may comprise the following step: F. exchanging data, directly, by means of said at least one processing sub-unit and said at least one transceiver module, when placed in the same fastening area.

Preferably according to the invention, said receiving step C may comprise the following sub-step: C1. receiving said association signal by means of said at least one transceiver module, located in a respective fastening area.

Always according to the invention, said comparison step D may comprise the following sub-step: D1. comparing, by means of said at least one processing sub-unit, the power of said association signal received in said receiving step C, with a predeterminable power threshold.

Still according to the invention, said method may comprise the following further step: G. transmitting, by means of said main transceiver means, a first identification code of the machine, to said further transceiving means of said blocking device.

Advantageously according to the invention, said transmission step G may comprise the following sub-steps: G1. transmitting, by means of said at least one transceiver module, said first identification code of the machine.

Further according to the invention, said method may comprise the following further step: H. transmitting, by means of said further transceiving means of a said blocking device, a second identification code of said blocking device, to said main transceiver means of said machine.

Preferably according to the invention, said association step E may comprise the following sub-step: E1. associating, in a memory location, said first identification code of the machine and said second identification code of the blocking device.

Always according to the invention, said method may comprise the following further step: I. generating, by means of said blocking device, and/or said machine, an acoustic and/or light signal, following an association between said blocking device and said machine.

Still according to the invention, said method may comprise a remote peripheral configured to process and/or store data, and said processing unit of said machine, and/or at least one of said blocking devices, exchanges data with said remote peripheral.

A further specific object of the present invention is a machine for working pieces made of wood, glass, marble, plastic, metal, composite materials, comprising a work table having a plurality of fastening areas for the support of a workpiece to be machined, on which one or more blocking devices can be mounted in an interchangeable way, main transceiver means, and a processing unit, connected to said main transceiver means, wherein each of said blocking devices comprises further transceiving means, characterized in that said processing unit is configured to carry out the method above.

Always according to the invention, said plurality of fastening areas of said work table, may comprise plurality of bars, which can be moved on said table, and on which said one or more blocking devices for supporting a piece are slidingly coupled in an interchangeable way.

Still according to the invention, said work table may be flat, and said plurality of fastening areas of said work table can comprise a plurality of flat fixing areas on said work table, on which said one or more blocking devices are interchangeably coupleable for supporting a workpiece.

### Brief description of the figures

The present invention will now be described for illustrative but not limiting purposes, according to its preferred embodiments, with particular reference to the figures of the attached drawings, in which:
figure 1 shows a side perspective view of the machine, provided with a bar table, in which an embodiment of the method according to the present invention is implemented;
figure 2 shows a side perspective view of the base and of the bar table of the machine of figure 1;
figure 3 shows a plan view of the base and of the bar table already illustrated in figure 2;
figure 4 shows a plan view of a portion of the base and of the bar table shown in figure 3 ;
figure 5 shows a side perspective view of the portion of the base and of the bar table shown in figure 4 ;

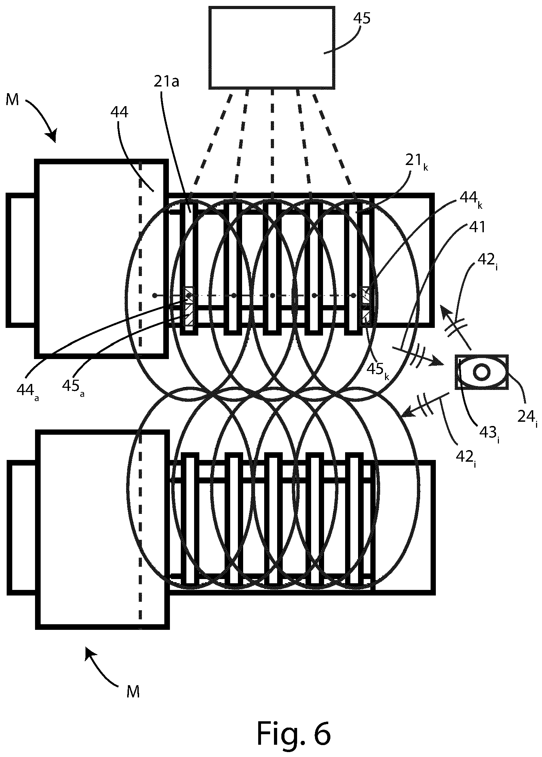

figure 6 shows two machines of the type shown in figure 1, on which the relative polar diagrams characteristic of the respective transceiver modules present on the bars of the table are indicatively represented; figure 6 also shows a blocking device before being assembled on one of the bars, and an exchange of signals between it and the machine;

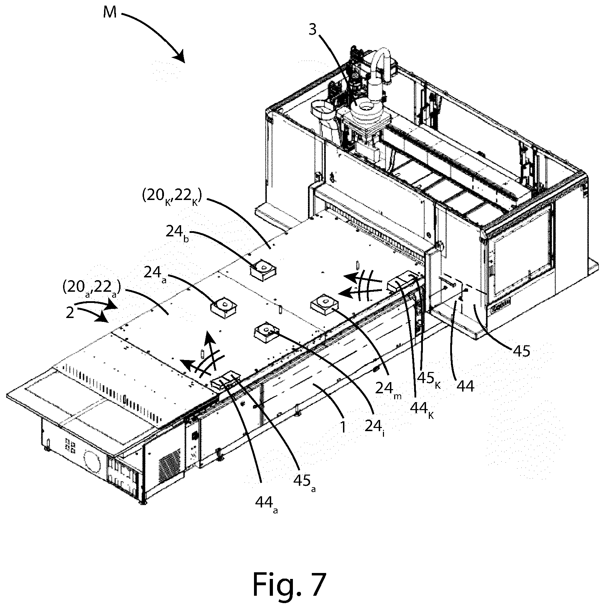

figure 7 shows a side perspective view of a machine, provided with a multifunctional table, in which the method according to the present invention is implemented; four suction cups can be seen assembled on the work table, placed in pairs in two distinct flat areas of it.

### Detailed description

In the various figures, similar parts will be indicated with the same reference numbers.

With reference to the aforementioned figures, it can be observed a machine M for working pieces P made of wood, glass, marble, plastic, metal, and composite materials object of the present invention, which essentially comprises a base 1 and a work table 2, which operatively it is divided into different fastening areas 20_{a,b,..,k,..n}, intended to house the blocking devices of the pieces to be worked. Among those expert of the sector, these blocking devices are distinguished between suction cups and clamps, but for the purposes of the present invention they are to be considered functionally fully equivalent.

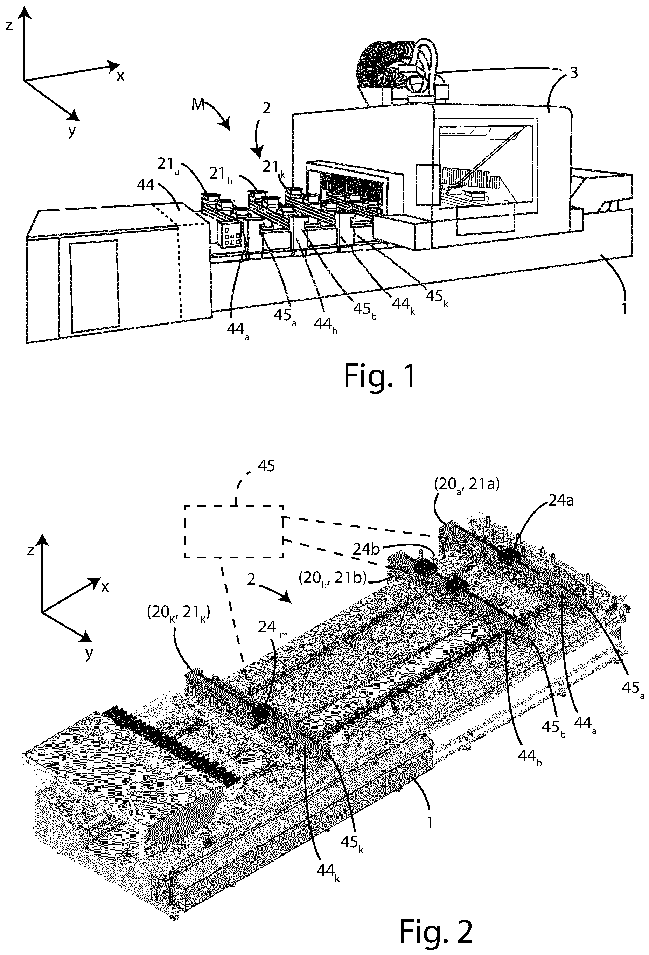

In the embodiment described here and more widespread due to the type of machines that form the object of the invention, the different fastening areas 20_{a,b,..,k,..n} into which said work table 2 is divided, assume the configuration of bars 21_{a,b,..,k,..n} movable along the base, on a common system of linear guides, as shown in figure 2.

In the machine described here, each bar 21ₖ is equipped with only suction cups.

In any case, in the following, when dealing with the bars 21_{a,b,..,k,..n}, it can also be implicitly made simultaneous reference to flat fixing areas 22_{a,b,..,k,..n}, identified in a machine equipped with a work table 2 of the multifunctional type, like flat portions of the same multifunctional table. For the purposes of computer association between a machine and the blocking devices better described below, there is complete functional equivalence between any flat fixing area 22ₖ of a multifunctional table, and any bar 21ₖ of a bar table.

The machine M also comprises a working unit 3, equipped with working tools of the pieces, which is movable with respect to the bar work table, according to a known architecture.

The machine M comprises main transceiver means 44, also operating in wireless mode, and a processing unit 45, connected to said main transceiver means 44.

Each of said bars 21ₖ of the machine M is arranged for the interchangeable assembly of a plurality of suction cups 24_{a,b,..,i,..m}.

With regard to each of the suction cups 24_{a,b,..,i,..m} provided for assembly on the machine M (on each bar 21ₖ thereof), it is considered that each suction cup 24ᵢ comprises further transceiving means 43ᵢ, operating in wireless mode, and according to a transceiving protocol compatible with that of said main transceiver means 44 of the machine M.

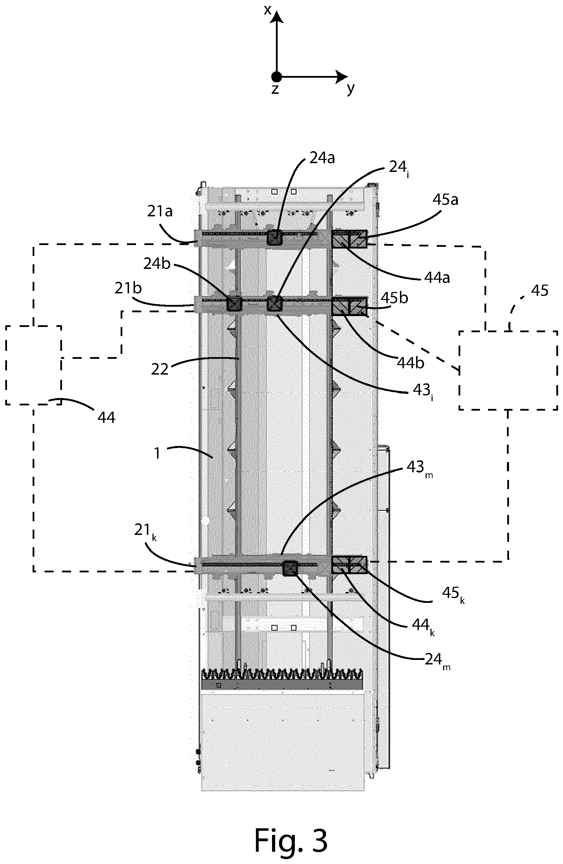

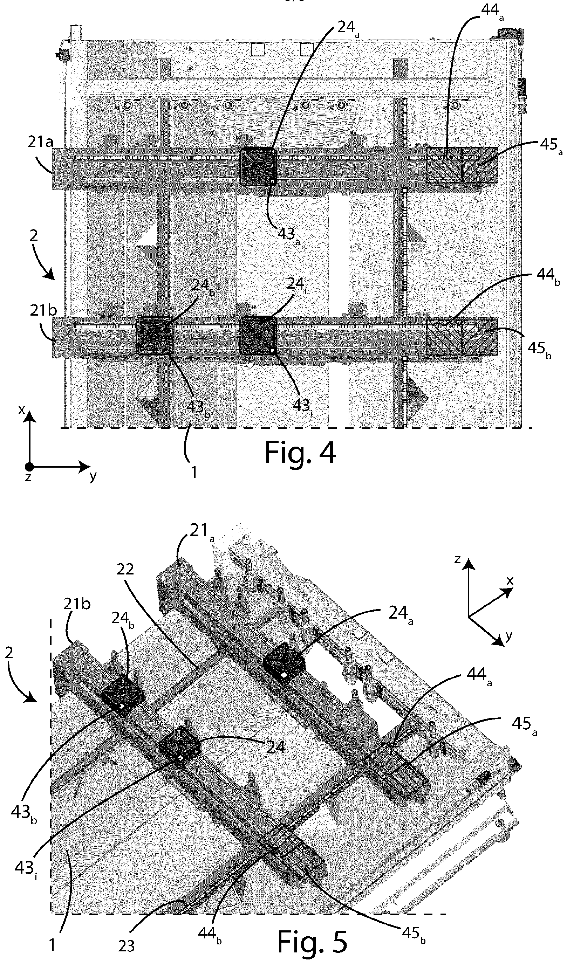

With reference to figures 1 to 5, it can be seen that one or more suction cups, such as 24ₐ, 24_{b}, ..., 24ᵢ, shown in said figures, are slidably assembled on each bar 21ₖ.

The clamping action of the pieces P by means of the suction cups takes place by means of the vacuum, whose action is maintained at least during the working of the piece by means of said working unit.

Each of the suction cups 24_{a,b,..,i,..m} assembled on a respective bar 21ₖ, during the machine tooling step, can be manually moved along the same bar, to then be definitively fixed in a point of it, which is established when programming the work, and which guarantees the blocking of the piece even under the stresses of the working.

Similarly, also on the various flat fixing areas 22_{a,b,..,k,..,n} of a multifunctional plane, one or more suction cups can be finally fixed in predetermined points of at least one flat fixing area 22ₖ, to obtain, also in that case, the clamping of the piece even under the stresses of the working.

Furthermore, the processing unit 45 of the machine M comprises as many processing sub-units 45_{a,b,..,k,..n} as there are bars 21_{a,b,..,k,..n} of the machine, and where each processing sub-unit 45ₖ is placed in a respective bar 21ₖ.

The main transceiver means 44 comprise as many transceiver modules 44_{a,b,..,k,..n} as there are bars of the machine, where each transceiver module 44k is located in a respective bar 21ₖ.

In the communication system of the machine described here, a wireless signal is transmitted by a suction cup 24ᵢ, exactly by the respective 43ᵢ of the aforementioned further transceiving means 43_{a,b,..,i,..,m} orderly included in each of the different suction cups 24_{a,b,..,i,..,m}.

Such a wireless signal represents an association signal, since it contains a unique identification code 42ᵢ of the same suction cup 24ᵢ that this wireless signal has transmitted, intended to be received by the machine M, more precisely by the aforementioned main transceiver means 44 thereof, via one of the transceiver modules 44_{a,b,..,k,..n}.

In the present embodiment, the signal power received by the aforementioned main transceiver means 44, in particular by any transceiver module 44ₖ allocated in a bar 21ₖ, is sent to the processing unit 45, in particular to the corresponding processing sub-unit 45ₖ placed in the same bar 21ₖ, and there it is compared with a signal power threshold of a predetermined value.

This occurs since each of the processing sub-units 45ₖ directly exchanges data with the relative transceiver module 44ₖ located in the same bar 21ₖ, so that said processing sub-unit 45ₖ receives the power data of a signal received from said module 44ₖ present in the bar itself, and immediately performs the comparison operation.

In particular, this comparison is made between the power of the association signal received by the transceiver module 44ₖ, and a previously memorized signal power threshold, which represents a value beyond which the processing sub-unit 45ₖ present in the bar 21ₖ, determines the association between the bar 21ₖ itself, taking the place of the machine M, and the suction cup 24ᵢ which had transmitted the association signal.

The machine M described here is programmed to carry out an association of the many-one type between the plurality of suction cups 24_{a,b,..,i,..m} and the machine M itself.

Said processing unit 45 of the machine M described here is also provided for exchanging data with a remote peripheral W, which operates according to known communication protocols, where W can be a mobile device such as a smartphone, a tablet, or the like, and where said remote peripheral W can process and/or store data. Said remote peripheral W can exchange data with said processing unit 45 via a computer network.

Also each suction cup 24ᵢ of the plurality of suction cups 24_{a,b,..,i,..m} provided for operating on the machine described here, is configured to exchange data with said remote peripheral W, to which full access is given (reading and writing) to the memory locations on each suction cup 24ᵢ.

Acoustic/luminous means are provided both on each 24ᵢ of the suction cups 24_{a,b,..,i,..m}, and on the machine M, which are activated synchronously for a few seconds, in order to warn the machine tooling operator that the association of a given suction cup 24ᵢ with the machine M has taken place, and allow the operator himself to take note of it.

In particular, on the machine M described here, said acoustic/luminous means are present on each of said bars 21_{a,b,..,k,..n}.

The association method according to the invention begins with a suction cup 24i which, by means of its own transceiver 43ᵢ (of the aforementioned additional transceiving means 43_{a,b,..,i,..m}), transmits an association signal. In one type of suction cups used with the machine M, the start of this transmission is initiated by the operator by pressing a command, generated by, for example, a button on the suction cup itself, which causes said association signal to be transmitted for a sufficient time to complete the operations. In a further type of suction cups, the transmission does not require actions for the activation, but takes place continuously.

In the association signal transmitted by the suction cup 24ᵢ (from its transceiver 43ᵢ), there is contained a respective identification code 42ᵢ that is unique to the suction cup itself, i.e. distinctive of the suction cup 24ᵢ with respect to each other, and which is set on it by the manufacturer in an invariable way.

Subsequently, by bringing the suction cup 24ᵢ close to a machine M while the suction cup is still in the transmission phase, there is the phase in which there is one (or more than one) bar 21ₖ of the machine M, which receives (through its own transceiver module 44ₖ) the association signal transmitted by the suction cup 24ᵢ, which is such because it contains the unique identification code 42ᵢ of the transmitting suction cup.

Since, as illustrated for the machine described above, the transceiver module 44ₖ of each bar 21ₖ is in direct connection with the respective processing sub-unit 45ₖ located in the same bar, and since the transceiver module 44ₖ itself is designed to send the parameters of said association signal received to the aforementioned processing sub-unit 45ₖ of the same bar, then the processing sub-unit 45ₖ of each bar, which receives the association signal, can proceed to perform the comparison operations, for which it is configured, between the power of the association signal received together with said unique identification code 42ᵢ of the suction cup 24ᵢ, and a signal power threshold, the value of which is predetermined, generally once and for all, while remaining editable on the basis of contingent needs.

If from the comparison made in any of the processing sub-units 45ₖ it results that the power of the signal detected by the relative transceiver module 44ₖ of the same bar exceeds the value of the predetermined threshold, then the same processing sub-unit 45ₖ orders the relative transceiver module 44ₖ to transmit a signal containing both a first identification code 41 of the machine, and the second identification code 42ᵢ of the suction cup previously transmitted by the suction cup 24ᵢ, and evaluated (in the bar 21ₖ) as exceeding the predetermined threshold.

This unique identification code 42ᵢ of the suction cup 24ᵢ is then retransmitted to the suction cup 24ᵢ itself, meaning that only it - having the 42ᵢ code and not others - is the recipient of the first identification code 41 of the machine transmitted in response by the bar 21ₖ to the suction cup 24ᵢ.

Subsequently, the associated codes (41, 42ᵢ) retransmitted by the machine, at least from a bar 21ₖ thereof, to the suction cup 24ᵢ, produce the inscription of the machine code 41 in the memory of the suction cup 24ᵢ.

The machine-suction cup association is thus completed, and from this step the suction cup will only accept commands coming from the machine whose identification code 41 it has stored in its memory.

Once the association has taken place, if the suction cup 24ᵢ itself detects a further association signal coming from a different machine than the one with which it is already associated, and where said further signal has greater power than the current association signal, said suction cup 24ᵢ will be associated with said different machine, which will probably be at a smaller distance than the machine to which the suction cup 24ᵢ was previously associated.

Downstream of these steps, which are hidden for the machine tooling operator, there is the step in which the bar which has detected a sufficient association signal, in determining the association itself, generates an acoustic and optical signal; and a similar signal is generated by the associated suction cup, which confirms to the operator that the machine and suction cup have been associated. In other embodiments, the generated signal can be only optical or only acoustic.

### Advantages

An advantage of the present invention is the fact of allowing the correct association between blocking devices, and a machine, achieved by means of the association method object of the invention.

This method is able to prevent commands issued by one machine, and intended for some blocking devices, from being carried out by other blocking devices located on another machine, in case there are several machines operating in the workplace according to the same transmission protocol.

Another advantage of the present invention is given by the fact that the association between the machine and the blocking devices takes place quickly, as well as precisely, without the need for any manual data entry.

A further advantage of the present invention is given by the fact that the association that occurs takes place in a completely automatic way.

Another advantage of the present invention is the association of a suction cup to the closest machine.

Another advantage of the present invention is the fact that the operator who sets up the machine is warned by acoustic and optical signals of the associations that have taken place, and therefore has full control of the relationship that is progressively created between the various blocking devices and the machine.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Method for the association of one or more blocking devices (24_{a, b, ..., i, ..., m}), to a machine for working (M) pieces (P) made of wood, glass, marble, plastic, metal, composite materials, wherein said working machine (M) comprises:
a work table (2) having a plurality of fastening areas (20_{a, b, ..., k, .., n}) for the support of a piece (P) to be machined, on which one or more blocking devices (24ₐ, _{b, ..., i, ..., m}) can be mounted in an interchangeable way,
main transceiver means (44), and
a processing unit (45), connected to said main transceiving means (44),
wherein each of said blocking devices (24ᵢ) comprises further transceiving means (43i),
said method comprising the step of:
A. functionally associating by means of said processing unit (45) one of said blocking devices (24ᵢ) to said working machine (M), as a function of the comparison between the power of an association signal exchanged between said blocking means (24ᵢ) and said machine (M), and a signal power threshold, of predeterminable value.

2. Method according to claim 1, **characterized in that** it further comprises the following steps:
B. transmitting an association signal by means of said further transceiving means (43i) of a blocking device (24i);
C. receiving said association signal by means of said main transceiver means (44) of said machine (M);
D. comparing, by means of said processing unit (45), the power of said association signal received in said step C, with a predeterminable power threshold; and
E. associating said blocking device (24ᵢ) to said machine (M), if the power of said received association signal is greater than said predeterminable power threshold.

3. Method according to any one of the preceding claims, **characterized in that** said processing unit (45) comprises at least one processing sub-unit (45_{a, b, ..., k, ..., n}), located in one of said fastening areas (20_{a, b,..., k,.., n}).

4. Method according to any one of the preceding claims, **characterized in that** said main transceiver means (44) comprise at least one transceiver module (44_{a, b, ..., k, ..., n}), located in one of said fastening areas (20_{a, b,.., k,.., n}).

5. Method according to claims 3 and 4, **characterized in that** it comprises the following step:
F. exchanging data, directly, by means of said at least one processing sub-unit (45_{a, b,..., k,.., n}) and said at least one transceiver module (44_{a, b,.., k,.., n}), when placed in the same fastening area (20_{a, b,.., k,.., n}).

6. Method according to any one of claims 4 or 5, **characterized in that** said receiving step C comprises the following sub-step:
C1. receiving said association signal by means of said at least one transceiver module (44ₖ), located in a respective fastening area (20ₖ).

7. Method according to any one of claims 3-6, when dependent on claim 3, **characterized in that** said comparison step D comprises the following sub-step:
D1. comparing, by means of said at least one processing sub-unit (45_{a, b,.., k,.., n}), the power of said association signal received in said receiving step C, with a predeterminable power threshold.

8. Method according to any one of the preceding claims, **characterized in that** it comprises the following further step:
G. transmitting, by means of said main transceiver means (44), a first identification code (41) of the machine (M), to said further transceiving means (43i) of said blocking device (24i).

9. Method according to claims 4 and 8, **characterized in that** said transmission step G comprises the following sub-steps:
G1. transmitting, by means of said at least one transceiver module (44ₖ), said first identification code (41) of the machine (M).

10. Method according to any one of the preceding claims, **characterized in that** it comprises the following further step:
H. transmitting, by means of said further transceiving means (43i) of a said blocking device (24i), a second identification code (42i) of said blocking device (24i), to said main transceiver means (44) of said machine (M).

11. Method according to claim 10, when dependent on claim 8 or 9, **characterized in that** said association step E comprises the following sub-step:
E1. associating, in a memory location, said first identification code (41) of the machine (M) and said second identification code (42i) of the blocking device (24i).

12. Method according to any one of the preceding claims, **characterized in that** it comprises the following further step:
I. generating, by means of said blocking device (24i), and/or said machine (M), an acoustic and/or light signal, following an association between said locking device (24ᵢ) and said machine (M).

13. Method according to any one of the preceding claims, **characterized**
**in that** it comprises a remote peripheral (W) configured to process and/or store data, and
**in that** said processing unit (45) of said machine (M), and/or at least one of said blocking devices (24_{a, b,.., i,.., m}), exchanges data with said remote peripheral (W).

14. Machine (M) for working pieces (P) made of wood, glass, marble, plastic, metal, composite materials, comprising
a work table (2) having a plurality of fastening areas (20_{a, b, .., k, ..., n}) for the support of a workpiece (P) to be machined, on which one or more blocking devices (24_{a, b, ..., i, ..., m}) can be mounted in an interchangeable way,
main transceiver means (44), and
a processing unit (45), connected to said main transceiver means (44),
wherein each of said blocking devices (24ᵢ) comprises further transceiving means (43i),
**characterized in that** said processing unit (45) is configured to execute the method according to any one of claims 1 to 13.

15. working machine (M) according to claim 14, **characterized in that** said plurality of fastening areas (20_{a, b, ..., k, ..., n}) of said work table (2), includes a plurality of bars (21_{a, b, ..., k, ..., n}), which can be moved on said table (2), and on which said one or more blocking devices (24_{a, b, ..., i, ..., m}) for supporting a piece (P) are slidingly coupled in an interchangeable way.

16. Working machine (M) according to claim 14, **characterized**
**in that** said work table (2) is flat, and
said plurality of fastening areas (20_{a, b, ..., k, ...,n}) of said work table (2) comprises a plurality of flat fixing areas (22_{a, b, ..., k, ..., n}) on said work table (2), on which said one or more blocking devices (24_{a, b, ..., i, ...,m}) are interchangeably coupleable for supporting a workpiece (P).

17. A computer program comprising instructions which, when the program is executed by a computer, cause the computer to execute the steps of the method according to any one of claims 1-13.

18. A computer readable storage medium comprising instructions which, when executed by a computer, cause the computer to execute the method steps according to any one of claims 1-13.
